Europäisches Patentamt

(19) European Patent Office

Office européen des brevets

(11) Publication number: **0 152 276**
**B1**

(12) **EUROPEAN PATENT SPECIFICATION**

(45) Date of publication of patent specification: **25.04.90**

(21) Application number: **85300804.3**

(22) Date of filing: **07.02.85**

(51) Int. Cl.⁵: **A 01 B 49/02**

(54) **Cultivating machine.**

(30) Priority: **10.02.84 GB 8403592**

(43) Date of publication of application:
**21.08.85 Bulletin 85/34**

(45) Publication of the grant of the patent:
**25.04.90 Bulletin 90/17**

(84) Designated Contracting States:
**DE FR GB IT NL SE**

(56) References cited:
**EP-A-0 070 396**
**EP-A-0 074 778**
**AU-B- 46 729**
**AU-B- 80 374**
**DE-A-2 821 863**
**DE-A-3 004 576**
**FR-A-2 353 214**
**FR-A-2 379 241**
**GB-A-2 019 703**
**NL-A-7 709 622**

(73) Proprietor: **THRIGE AGRO A/S**
**Gyrovej 1-5**
**DK-7800 Skive (DK)**

(72) Inventor: **Linger, Barry Anthony**
**Howard Machinery p.l.c. Mendham Lane**
**Harleston Norfolk IP20 9DP (GB)**

(74) Representative: **Cowan, David Robert et al**
**WALFORD AND HARDMAN BROWN 5, The**
**Quadrant**
**Coventry CV1 2EL (GB)**

Courier Press, Leamington Spa, England.

## Description

This invention relates to cultivating machines and in particular to cultivating machines of the kind having a rotor carrying rotary cultivating tools, and fixed cultivating tools working in conjunction with the rotary tools to cultivate the ground.

It has been proposed to have cultivating machines with the combination of fixed and rotary cultivating tools in which the fixed tools are located in advance of the path of travel of the rotary tools to loosen the ground before it is acted on by the rotary tools. For example in British patent specification 2105561 there is proposed a machine having a horizontal rotor shaft fitted with cultivating tools and mounted on a frame supported towards its rear relative to the ground on a roller. The frame is connected at its forward end by pivots to a further frame on which fixed tools or tines are carried. Such a machine is connected to a tractor vehicle through the forward frame being attached to the vehicle three point linkage. In use the rotor frame is movable relative to the forward frame about the pivotal attachment and the forward frame is able to move up and down upon movement of the three point linkage but the vertical movement of the rotor frame is influenced by the vertical movement of the forward frame and vice versa. This results in the machine being unable to travel and operate at a relatively high forward speed, particularly under uneven ground conditions.

In a further British patent specification No. 2046061 there is disclosed a cultivating machine having a forward frame carrying fixed cultivating tools. The forward frame includes depth control wheels in front of and secured to the frame for controlling the depth of operation of the fixed tools. A rotor with rotary tools is mounted on a further frame and the further frame is pivotally mounted with respect to the forward frame.

In EP—A—70396 there is disclosed a cultivating machine having a tool carrying frame on which fixed cultivating tools are mounted and a rotor carrying frame on which a rotor is mounted. The rotor carrying frame has support means for supporting the frame relative to the ground and lying in advance of said rotor frame. The fixed tool carrying frame is in advance of the rotor carrying frame and has attachment means for mounting the tool carrying frame on a tractor for movement relative to the tractor. In addition the frames are connected by coupling means for relative movement in the vertical direction.

In each case the prior machines are so arranged that the respective depth of operation of the fixed and the rotary tools influence one another and it is an object of the invention to provide an improved depth control arrangement.

According to the invention the cultivating machine according to the preamble of claim 1 is characterised in that the coupling means enables, during operative movement over the ground, the frames to be independently vertically movable relative to one another, and the support means for the rotor carrying frame extends forwardly to be engageable with the ground in a position in advance of the coupling means coupling the rotor carrying frame to the tool carrying frame.

Preferably the support means is arranged to be engageable with the ground at a position in advance of the tool carrying frame.

Conveniently the support means includes a wheel at each transverse end of the rotor carrying frame, each wheel being carried on an arm extending forwardly from said rotor carrying frame.

In this way the frames can move up and down independently relatively to one another without vertical movement of one frame influencing vertical movement of the other frame. In practice this means that if, for example, the rotary tools encounter an obstruction or particularly heavy ground they can rise vertically relative to the fixed tool carrying frame until the obstruction has passed without the position of the fixed tools in the ground being affected.

Preferably the rotor carrying frame includes further support means to the rear of said frame with respect to the direction of travel of the machine.

To enable the vertical relative movement to take place without relative horizontal movement between the frames the rotor carrying frame may be coupled to the tool carrying frame by coupling means whereby the frames are vertically movable relative to and independently of one another and the coupling means may include a pin and slot connection, the pin being movable vertically in the slot during relative movement between the two frames.

Conveniently the rotor comprises a generally horizontal rotor shaft 20 about which are fixed a plurality of outwardly-directed cultivating tools 23, the rotor shaft being connectable to drive means 19, 21 for the shaft.

In one arrangement the rotor carrying frame is adjustably supported to adjust the depth of operation of the associated rotary tools in relation to the ground surface.

Further features of the invention will appear from the following description of an embodiment of the invention given by way of example only and with reference to the drawings in which:—

Fig. 1 is a perspective view of a cultivating machine, as seen from the rear and one side, with a partially broken away portion, and

Fig. 2 is an end view of part of the invention of Fig. 1.

Referring to the drawings, a cultivating machine is shown which is arranged to be drawn behind and powered by a tractor or like traction vehicle. The machine has a direction of travel A over the ground during operation.

The machine comprises two relatively movable frame members, a tool carrying frame 10 located in advance of a rotor carrying frame 11 with respect to the direction of travel A.

The tool carrying frame 10 includes a transverse tool bar 15 on which are mounted transversely-spaced fixed cultivating tools 12. As illustrated the tools 12 are of the form each including resilient tines 13 having a replaceable wearing element 14 at their lower ends.

The frame 10 has lower connection members 16, only one of which is seen, spaced apart horizontally and arranged to be releasably connected to the lower links of a tractor three point linkage (not shown) in conventional manner. The frame 10 also includes an upwardly-extending portion 17 on which is located a connection member 18 for attachment to the upper link (not shown) of the tractor three point linkage.

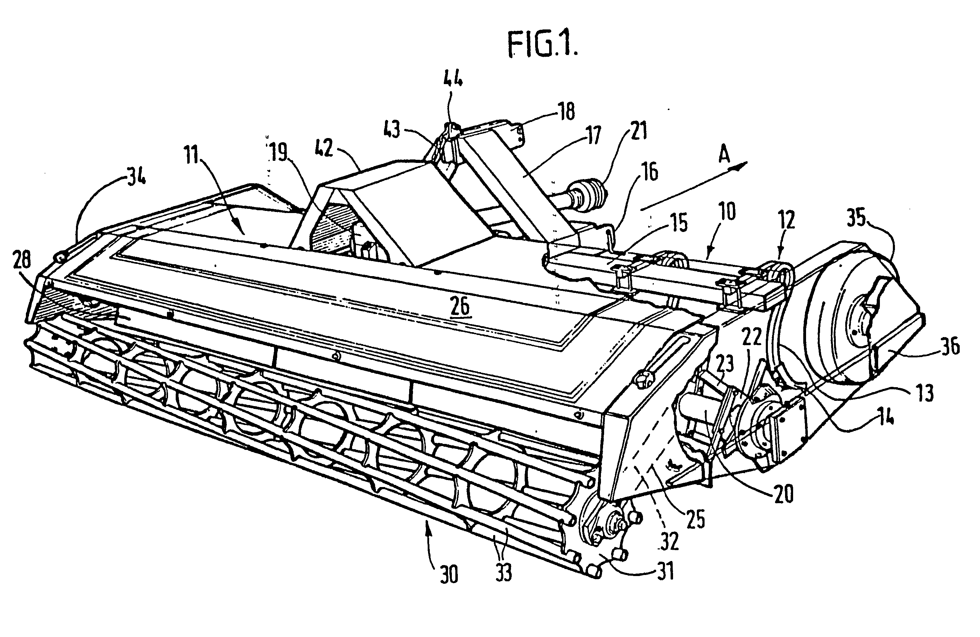

The rotor carrying frame 11 includes a horizontal rotor shaft 20 arranged to be driven by the power take off of the tractor through an input shaft 21 and through transmission means. Such transmission means may be of conventional form including centrally mounted gearbox 19 on the frame 11 drivingly connected to the shaft 21, and chain drive (not shown) from the gearbox to a central part of the rotor shaft 20 to drive the shaft in the clockwise direction, as seen in Fig. 1.

The rotor shaft 20 carries a plurality of planar flanges 22 spaced equally apart along the shaft 20 and each of the flanges being at an acute angle to the axis of the shaft 20, adjacent flange members being angularly displaced from one another about said axis. The flanges 22 releasably carry cultivating tools 23 which are directed outwardly of the shaft and the outer ends of the tools 23 lie on a notional cylinder of rotation having the axis of the shaft as its axis. Thus the rotor shaft 20, flanges 22 and tools 23 may take the form described in British Patent Specification No. 1,592,961.

The frame 11 includes end plates 25 rotatably supporting the ends of the shaft 20 and a transverse hull member 26 to which the plates 25 are attached. The hull member 26 may include sheet metal hull elements defining a hollow section and the hollow space in the hull member 26 may be filled with foamed plastics material for sound deadening purposes and for increased strength.

To the rear of the shaft 20 is located a shield or baffle 28 which is attached to the hull member 26 at its upper edge and the shield 28 extends downwardly and rearwardly into the path of soil worked by the tools 23. The shield 28 is conveniently formed of resilient sheet plastics material.

The frame 11 is supported at the desired level in relation to the ground surface by, at the rear, a roller 30 rotatable, upon engagement with the ground surface, about a transverse horizontal axis. The roller may take a known form consisting of end members or flanges 31 journalled on pivotal arms 32 and interconnected by a plurality of rods 33. Height adjustment means 34 are mounted on the frame 11 at each end thereof for adjustment of the positions of the arms 32 about their respective pivots.

At the forward end the frame 11 is supported by wheels 35 at opposite ends of the frame 11 and each mounted on a forwardly extending rigid arm 36 from the frame 11. Height adjustment means may be associated with each arm 36 to adjust the position of the arm about its attachment to the frame 11 and thereby alter the height of the wheel 35 relative to the frame 11. The wheels are located in the path of the outermost tools 12.

Once the position of the wheels 35 and the roller 30 have been selected the depth of operation of the tools 12 in the ground is determined. However, as will be explained, the frame 11 can move upwardly relative to the frame 10 should, for example, the tools 12 encounter hard ground or otherwise tend to be raised relative to the ground surface during use.

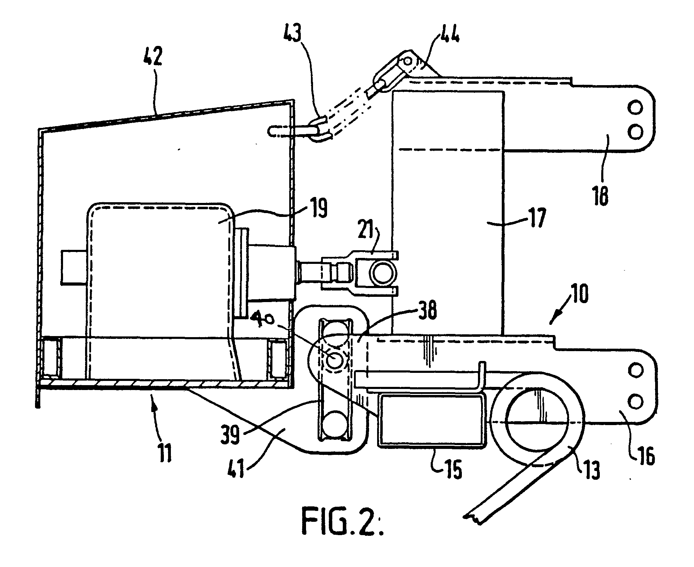

The rotor carrying frame 11 is coupled to the tool carrying frame 10 towards the lower ends of the frames by horizontally spaced brackets 38 extending rearwards of the frame 10 (Fig. 2). The brackets 38 each carry a pin 40 which locates in a vertical slot 39 formed in each of two forwardly extending brackets 41 mounted on the frame 11. Thus upon relative up and down movement between the frames 10 and 11 the pins 40 move in the slots 39. At the same time tractive force by the tractor on the frame 10 is transmitted through the brackets 38 and 40 to the frame 11.

Towards the upper ends of the frames 10 and 11 a flexible connection is made, in this case by a chain 43 attached at one end to a bracket 44 on the frame 10 and at the other end to a pin (not shown) carried on a housing 42 secured to the frame 11. The chain 43 interconnects the upper ends of the frames 10 and 11 to limit pivoting of one frame relative to the other about the pins 40 particularly during lifting of the machine on the tractor three point linkage to a transport position, out of engagement with the ground surface. The chain 43 may be resiliently attached to the frames.

It will be seen that during operation the tool carrying frame 10 and the rotor carrying frame 11 can move relative to one another in the generally vertical direction. This feature is of particular value in relation to the machine described which is primarily intended for cultivation of a surface layer of soil to a depth of about 5—10 cm at a relatively high forward speed of up to 12 km/h. During operation the tool carrying frame 10 is subject to draft control through the tractor three point linkage and this causes the tools to be lifted up and down according to the resistance to forward movement encountered. With the arrangement described such movement can take place irrespective of the position of the rotor carrying frame 11. However the frame 11 can, in its turn, move up and down under the influence of the force on the rotor shaft causing the rotor to move upwards out of the ground independently of the position of the frame 10.

**Claims**

1. A cultivating machine comprising a tool carrying frame (10) on which fixed cultivating tools (12) are mounted, a rotor carrying frame (11) on which at least one rotor (20) is mounted, the rotor carrying frame (11) having support means (35, 36) for supporting the frame (11) relative to the ground and located in advance of said frame (11), the rotor having rotary cultivating tools (23) for rotation with the rotor, the tool carrying frame (10) for the fixed tools (12) being located in advance of the rotor carrying frame (11) with respect to the direction of travel (A) of the machine and havig attachment means (16, 18) for mounting the frame on the three point linkage of a tractor vehicle for movement vertically relative to the vehicle, the rotor carrying frame (11) being coupled by coupling means (38, 39, 40) to the tool carrying frame (10) for relative movement between the frames in the vertical direction, characterised in that the coupling means (38, 39, 40) enables, during operative movement over the ground, the frames (10, 11) to be independently vertically movable relative to one another, and the support means (35, 36) for the rotor carrying frame (11) extends forwardly to be engageable with the ground in a position in advance of the coupling means (38, 39, 40) coupling the rotor carrying frame to the tool carrying frame.

2. A cultivating machine according to claim 1 wherein the support means (35, 36) is arranged to be engageable with the ground at a position in advance of the tool carrying frame (10).

3. A cultivating machine according to claim 1 or 2 wherein the support means includes a wheel (35) at each transverse end of the rotor carrying frame (11), each wheel being carried on an arm (36) extending forwardly from said rotor carrying frame.

4. A cultivating machine according to claim 3 wherein the arms (36) are rigidly securable to the rotor carrying frame (11).

5. A cultivating machine according to any one of the preceding claims wherein the rotor carrying frame (11) includes further support means (30) to the rear of said frame with respect to the direction of travel (A) of the machine.

6. A cultivating machine according to any one of claims 1—5 wherein the coupling means includes a pin and slot connection, the pin (40) being movable vertically in the slot (39) during relative movement between the two frames.

7. A cultivating machine according to any one of the preceding claims wherein the rotor comprises a generally horizontal rotor shaft (20) about which are fixed a plurality of outwardly-directed cultivating tools (23), the rotor shaft being connectable to drive means (19, 21) for the shaft.

8. A cultivating machine according to any one of the preceding claims wherein the tool carrying frame (10) supports a plurality of transversely spaced fixed cultivating tools (12).

9. A cultivating machine according to any one of the preceding claims wherein the rotor carrying frame (11) is adjustably supported to adjust the depth of operation of the associated rotary tools (23) in relation to the ground surface.

10. A cultivating machine according to any one of the preceding claims wherein the rotor carrying frame (11) includes a sheet metal hull (26) the hollow interior of which contains foamed plastics material.

## Patentansprüche

1. Bodenbearbeitungsmaschine mit einem Werkzeugtragrahmen (10), an dem feststehende Bodenbearbeitungswerkzeuge (12) befestigt sind, und mit einem Rotortragrahmen (11), an dem zumindest ein Rotor (20) montiert ist, der Rotortragrahmen (11) hat Tragvorrichtungen (35, 36), die den Rahmen (11) relativ zum Boden abstützen und die vor dem Rahmen (11) angeordnet sind, der Rotor ist mit rotierenden Rotationsbearbeitungswerkzeugen (23) ausgerüstet, die zusammen mit dem Rotor rotieren, der Werkzeugtragrahmen (10) für die feststehenden Werkzeuge (12) ist in Fahrtrichtung (A) der Maschine vor dem Rotortragrahmen (11) angeordnet und besitzt Anlenkvorricktungen (16, 18) zum Anhängen des Rahmens an das Dreipunktgestänge eines Traktors, wobei der Rahmen relativ zum Traktor vertikal bewegbar ist, der Rotortragrahmen (11) ist mittels Kupplungsvorrichtungen (38, 39, 40) mit dem Werkzeugtragrahmen (10) verbunden, die eine Relativbewegung zwischen den Rahmen in vertikaler Richtung ermöglichen, dadurch gekennzeichnet, daß die Kupplungsvorrichtungen (38, 39, 40) während der Fahrtbewegung bei der Bodenbearbeitung eine unabhängige Vertikalbewegung zwischen den beiden Rahmen zulassen und daß die Tragvorrichtungen (35, 36) für den Rotortragrahmen (11) sich nach vorne bis in eine Position, in der sie den Boden berühren, erstrekken, die vor den Kupplungsvorrichtungen (38, 39, 40) zum Ankuppeln des Rotortragrahmens an den Werkzeugtragrahmen liegt.

2. Bodenbearbeitungsmaschine nach Anspruch 1, bei der sich die Tragvorrichtungen (35, 36) nach vorne bis in eine Position, in der sie den Boden berühren erstrecken, die vor dem Werkzeugtragrahmen (10) liegt.

3. Bodenbearbeitungsmaschine nach Anspruch 1 oder 2, bei der die Tragvorrichtungen an den Querenden des Rotortragrahmens (11) jeweils ein Rad (35) besitzen, und jedes Rad an einem Arm (36) gelagert ist, der sich von dem Rotortragrahmen (11) nach vorn erstreckt.

4. Bodenbearbeitungsmaschine nach Anspruch 3, bei der die Arme (36) mit dem Rotortragrahmen (11) fest verbindbar sind.

5. Bodenbearbeitungsmaschine nach einem der vorhergehenden Ansprüche, bei der der Rotortragrahmen (11) ein weiteres Tragelement (30) am in Fahrtrichtung (A) der Maschine hinteren Ende des Rahmens aufweist.

6. Bodenbearbeitungsmaschine nach einem der vorhergehenden Ansprüche 1 bis 3, bei der die Kupplungsvorrichtungen eine Bolzen und Schlitz-Verbindung aufweist, und der Bolzen (40) innerhalb des Schlitzes (39) während der Fahrtbewegung bei der Bodenbearbeitung vertikal bewegbar ist.

7. Bodenbearbeitungsmaschine nach einem der vorhergehenden Ansprüche, bei der der Rotor eine im wesentlichen horizontale Rotorwelle (20) besitzt, auf der eine Vielzahl nach außen gerichteter Bearbeitungswerkzeuge (23) befestigt sind, wobei die Rotorwelle mit einer Antriebseinrichtung (19, 21) für die Welle verbindbar ist.

8. Bodenbearbeitungsmaschine nach einem der vorhergehenden Ansprüche, bei der der Werkzeugtragrahmen (10) eine Vielzahl von quer im Abstand zueinander angeordnete Bearbeitungswerkzeuge (12) besitzt.

9. Bodenbearbeitungsmaschine nach einem der vorhergehenden Ansprüche, bei der der Rotortragrahmen (11) einstellbar gelagert ist, um die Arbeitstiefe der zugeordneten Rotationsbearbeitungswerkzeuge (23) relativ zur Bodenoberfläche einzustellen.

10. Bodenbearbeitungsmaschine nach einem der vorhergehenden Ansprüche, bei der der Rotortragrahmen (11) einen Metallkörper (26) aufweist, dessen hohler Innenraum geschäumten Kunststoff enthält.

**Revendications**

1. Engin cultivateur comprenant un châssis porteur d'outils (10) sur lequel sont montés des outils cultivateurs fixes (12), un châssis porteur de rotor (11) sur lequel est monté au moins un rotor (20), le châssis porte rotor (1) comportant des moyens de support (35, 36) destinés à supporter le châssis (11) par rapport au sol et positionnés en amont du châssis (11), le rotor disposant d'outils cultivateurs rotatifs (23) pour la rotation avec le rotor, le châssis porteur d'outils (10) pour les outils fixes (12) étant situé en amont du châssis porteur de rotor (11) par rapport au sens de marche (A) de l'engin et comportant des moyens de fixation (16, 18) pour le montage du châssis sur l'attelage à trois points d'un tracteur pour le mouvement verticalement par rapport au tracteur, le châssis porteur de rotor (11) étant relié par des moyens d'accouplement (38, 39, 40) au châssis porteur d'outils (10) pour le mouvement relatif entre les châssis dans la direction verticale, caractérisé en ce que les moyens d'accouplement (38, 39, 40) permettent aux châssis (10, 11), lors du mouvement de travail sur le sol, d'être mobiles indépendamment et verticalement l'un par rapport à l'autre, et les moyens de support (35, 36) pour le châssis porteur de rotor (11) s'étend vers l'avant pour s'engager dans le sol dans une position en amont des moyens d'accouplement (38, 39, 40) reliant le châssis porteur de rotor au châssis porteur d'outils.

2. Engin cultivateur selon la revendication 1, dans lequel les moyens de support (35, 36) sont agencés de façon à pouvoir s'engager dans le sol en une position située en amont du châssis porteur d'outils (10).

3. Engin cultivateur selon la revendication 1 ou 2, dans lequel le moyen de support comprend une roue (35) sur chaque extrémité transversale du châssis porteur de rotor (11), chaque roue étant supportée par un bras (36) s'étendant vers l'avant à partir du châssis porteur de rotor.

4. Engin cultivateur selon la revendication 3, dans lequel les bras (36) peuvent être assujettis de façon rigide au châssis porteur de rotor (11).

5. Engin cultivateur selon l'une quelconque des revendications précédentes, dans lequel le châssis porteur de rotor (11) comprend des moyens de support supplémentaires (30) à l'arrière du châssis par rapport au sens de marche (A) de la machine.

6. Engin cultivateur selon l'une quelconque des revendications 1, 5, dans lequel les moyens d'accouplement comprennent un raccord à fente et à goupille, la goupille (40) étant mobile verticalement dans la fente (39) pendant le mouvement relatif entre les deux châssis.

7. Engin cultivateur selon l'une quelconque des revendications précédentes, dans lequel le rotor comprend un arbre de rotor généralement horizontal (20) sur lequel sont fixés plusieurs outils cultivateurs (23) dirigés vers l'extérieur, l'arbre de rotor pouvant être raccordé au moyen d'entraînement (19, 21) pour l'arbre.

8. Engin cultivateur selon l'une quelconque des revendications précédentes, dans lequel le châssis porteur d'outils (10) supporte plusieurs outils cultivateurs fixes (12) espacés transversalement.

9. Engin cultivateur selon l'une quelconque des revendications précédentes, dans lequel le châssis porteur de rotor (11) est supporté de façon réglable pour ajuster la profondeur de travail des outils rotatifs associés (23) par rapport à la surface du sol.

10. Engin cultivateur selon l'une quelconque des revendications précédentes, dans lequel le châssis porteur de rotor (11) comprend une carcasse en tôle métallique (26) dont l'intérieur creux contient du plastique alvéolaire ou expansé.

FIG1.

FIG.2.